Europäisches Patentamt

European Patent Office

Office européen des brevets

(19)

(11) Numéro de publication : **0 033 680**
**B1**

(12) **FASCICULE DE BREVET EUROPÉEN**

(45) Date de publication du fascicule du brevet :
02.05.84

(21) Numéro de dépôt : **81400079.0**

(22) Date de dépôt : **21.01.81**

(51) Int. Cl.³ : **G 11 B 21/20**, G 11 B 5/60//
**G11B5/40**

(54) **Plate-forme contenant au moins un transducteur de lecture et/ou d'enregistrement d'un support d'informations.**

(30) Priorité : **31.01.80 FR 8002144**

(43) Date de publication de la demande :
**12.08.81 Bulletin 81/32**

(45) Mention de la délivrance du brevet :
**02.05.84 Bulletin 84/18**

(84) Etats contractants désignés :
**DE GB IT**

(56) Documents cités :
**FR-A- 2 426 943**
**GB-A-   763 815**
**US-A- 3 612 775**
**US-A- 3 846 835**
**US-A- 4 017 898**
**IBM TECHNICAL DISCLOSURE BULLETIN, vol. 9, no. 12, mai 1967, page 1746 New York, U.S.A. J.P. SCHNEEBELI: "Flying head loading control"**

(73) Titulaire : **COMPAGNIE INTERNATIONALE POUR L'INFORMATIQUE CII - HONEYWELL BULL (dite CII-HB)**
**94, avenue Gambetta**
**F-75020 Paris (FR)**

(72) Inventeur : **Piotto, Michel**
**94, avenue Gambetta**
**F-75020 Paris (FR)**
Inventeur : **Teucilde, Jean-Claude**
**94, avenue Gambetta**
**F-75020 Paris (FR)**

(74) Mandataire : **Gouesmel, Daniel**
**94, avenue Gambetta**
**F-75020 Paris (FR)**

Jouve, 18, rue St-Denis, 75001 Paris, France

Plate-forme contenant au moins un transducteur de lecture et/ou d'enregistrement
d'un support d'informations

La présente invention concerne une plate-forme contenant au moins un transducteur de lecture et/ou d'enregistrement d'un support d'informations. Elle est notamment applicable aux périphériques magnétiques des systèmes de traitement de l'information tels que les mémoires à disques.

Dans les systèmes de traitement de l'information, l'utilisation de mémoire à disques magnétiques est de plus en plus fréquente en raison de leur capacité de stockage et du temps relativement court mis par les transducteurs de lecture et/ou d'enregistrement (on dit encore « transducteurs de lecture et/ou d'écriture ») à accéder à une information contenue en un point quelconque des disques à partir du moment où les transducteurs reçoivent dudit système de traitement l'ordre d'accéder à cette information.

On sait que les disques magnétiques portent les informations sur des pistes d'enregistrement concentriques circulaires qui ont une largeur radiale n'excédant pas quelques centièmes de millimètres et couvrent la majeure partie de leurs deux faces.

Lorsqu'une telle mémoire comprend plusieurs disques, ceux-ci sont parallèles, coaxiaux et le plus souvent de même diamètre.

Que la mémoire comporte plusieurs disques ou un seul, ceux-ci (celui-ci) sont entraînés (est entraîné) à vitesse de rotation constante, par un moteur électrique.

Dans la pratique courante, à chaque face d'un disque, on associe généralement un seul transducteur. Lorsque l'on veut diminuer sensiblement le temps mis pour accéder à toute information contenue sur cette face, on lui associe alors plusieurs transducteurs dont le nombre ne dépasse pas une ou deux dizaines d'unités et reste très inférieur au nombre de pistes. Dans la suite de la description, l'expression « face du disque » impliquera l'association de celle-ci à un ou plusieurs transducteurs.

Généralement, les transducteurs associés à une face d'un disque, sont portés par un même corps principal monté sur une plate-forme qui comporte en outre un dispositif de suspension fixé à ce corps principal. On dit par extension que le corps principal (et également la plate-forme) est associé(e) à ladite face.

Il existe deux types de plate-forme, à savoir :

— les plates-formes de type mobile, que l'on déplace radialement au-dessus de la face du disque qui leur est associé, afin de permettre au(x) transducteur(s) porté(s) par leur corps principal d'accéder à toute information contenue sur cette même face. (Dans ce cas, le dispositif de suspension de la plate-forme est monté sur un chariot qui se déplace à l'extérieur des disques.)

— les plates-formes de type fixe, qui lors des opérations de lecture et/ou d'enregistrement, restent en permanence immobiles au-dessus de pistes parfaitement déterminées de la face du disque à laquelle les transducteurs de leur corps principal sont associés, chacun de ceux-ci restant, dans le temps, associé à une seule et même piste. Leur dispositif de suspension est alors fixé sur le bâti de la mémoire à disques.

On voit que, quel que soit son type (fixe ou mobile) la plate-forme est fixée par l'intermédiaire de son dispositif de suspension, à des moyens porteurs. (Chariot pour une plate-forme de type mobile, bâti de la mémoire à disques pour une plate-forme de type fixe.)

Les plates-formes utilisées le plus fréquemment dans la pratique courante, sont de type mobile.

Le plus souvent, les transducteurs sont formés par un circuit magnétique autour duquel est disposé un enroulement, et qui comporte un entrefer. Cet enroulement est relié par des conducteurs électriques d'entrée et/ou sortie aux circuits électroniques de lecture et/ou d'enregistrement de la mémoire à disques qui comporte des transducteurs.

La variation de l'induction à l'intérieur de l'entrefer de chaque transducteur, permet la lecture et/ou l'enregistrement des informations contenues sur la face du disque qui lui est associé. De ce fait, l'entrefer constitue donc les moyens du transducteur pour capter et/ou enregistrer les informations.

Généralement, mais non exclusivement, le corps principal d'une plate-forme a la forme d'un parallélépipède rectangle relativement plat dont une première « grande face » disposée en regard de la face du disque contient le ou les entrefers du (des) transducteur(s), la seconde « grande face » sensiblement parallèle à la première, contenant les extrémités des conducteurs d'entrée et/ou sortie de ce (ces) transducteur(s).

Au cours de la rotation du disque, il se forme entre celui-ci et la première « grande face » du corps principal un coussin d'air comprimé qui empêche ce corps de le toucher et par suite de le détériorer. On dit alors que le corps principal vole au-dessus du disque.

La distance entre l'entrefer (les entrefers) du (des) transducteur(s) et la face du disque est appelée « altitude de vol » ou encore « hauteur de vol » du corps principal. Elle est habituellement de l'ordre de quelques dizièmes de microns.

Le coussin d'air exerce une pression sur toute ou partie de la première « grande face » du corps principal, normalement à celle-ci et dirigé vers sa seconde « grande face ». On désigne sous le nom de « surface de vol » la partie de la « première grande face » soumise à la pression du coussin d'air.

La force qui résulte de celle-ci est appelée « portance du corps principal ». Elle est fonction de la surface de vol.

L'équilibre dynamique du corps principal en vol est obtenu en opposant à la portance une force égale et opposée dite « force de chargement »

généralement appliquée sur la « seconde grande face ».

Dans la pratique courante, on utilise de plus en plus fréquemment des plates-formes connues dans la technique sous le nom de plate-forme « Winchester ». De telles plates-formes sont notamment fabriquées par la Société « Applied Magnetic Corporation » (A.M.C.) sous la référence 3304 et 3306.

Une plate-forme de type « Winchester » est réalisée de la manière suivante.

On pratique sur la face inférieure de son corps principal une ou plusieurs gorges (qu'on appelle également rainures) dont la profondeur est supérieure ou égale à 30 microns, et peut atteindre jusqu'à quelques dizièmes de millimètres. Il en résulte sur cette face l'existence de plusieurs parties saillantes qu'on appelle patins, qui ont généralement la forme de ski.

La surface des patins qui se trouve en regard de la face du disque, constitue la surface de vol. La portance étant proportionnelle à cette surface, on voit que les rainures pratiquées dans la face inférieure du corps principal, en diminuant la surface de vol (par rapport à un corps principal ne contenant pas de rainures), permettent de diminuer la portance et par suite la force de chargement. Cette dernière est par exemple fournie par un ressort précontraint, solidaire du dispositif de suspension de la plate-forme. (Dans certains cas, de la pratique courante, ledit ressort constitue le tout ou partie du dispositif de suspension lui-même.)

Cette force de chargement, est relativement faible et de l'ordre de dix à vingt grammes. De ce fait, on dit que la plate-forme de type « Winchester » est une plate-forme à faible charge.

Généralement, le vol d'un corps principal de plate-forme de type « Winchester » au-dessus de la face du disque qui lui est associée, s'effectue de telle façon que la surface des patins soit généralement inclinée, par rapport à la face du disque. Cela procure à ceux-ci une portance suffisante pour que le vol du corps principal soit relativement stable.

Les plates-formes de type « Winchester », à faible charge, qui ont donc de faibles altitudes de vol, permettent :

1. d'une part, du fait de cette faible altitude de vol, d'obtenir des signaux de lecture délivrés par leur(s) transducteur(s) d'amplitude relativement élevée, ce qui permet une bonne fiabilité de lecture,

2. d'autre part, du fait de leur faible charge, d'éviter au corps principal de la plate-forme de percuter le disque et par suite d'endommager aussi bien ce dernier que ledit corps principal.

Toutefois, du fait de la faible force de chargement, ces plates-formes ont un inconvénient : la probabilité pour que le vol de leur corps principal au-dessus de la face du disque qui lui est associée, soit relativement instable n'est pas négligeable. En effet, le corps principal et le dispositif de suspension sont soumis à des forces autres que la force de chargement et appelées « forces parasites ». Celles-ci sont dues par exemple :

— aux vibrations engendrées par différents éléments de la mémoire à disques, tels que le moteur d'entraînement du disque ou le moteur d'entraînement du chariot qui porte le dispositif de suspension de la plate-forme,

— des mouvements d'oscillation propres du corps principal autour d'une position moyenne qui le fait s'éloigner ou se rapprocher du disque,

— les turbulences de l'air au voisinage de la surface du disque associée au transducteur du corps principal de la plate-forme. Lorsque la mémoire à disques comporte plusieurs disques, ces turbulences sont particulièrement importantes dans l'espace situé entre deux disques. Les forces qui en résultent agissent essentiellement sur le dispositif de suspension.

Parmi les forces parasites les plus importantes, on compte celles dues aux turbulences.

On montre que ces forces parasites ont pour effet de faire varier sensiblement la hauteur de vol du corps principal, ce qui entraîne des variations très sensibles dans l'amplitude des signaux de lecture, qui peuvent entraîner à leur tour des erreurs dans la détermination de la valeur des informations enregistrées sur les disques. Il importe donc de réduire l'importance desdites forces, soit en supprimant tout ou partie, soit en limitant leurs effets.

Dans la pratique courante, on réduit les forces parasites dues aux vibrations propres du corps principal de la plate-forme en disposant le dispositif de suspension de celle-ci le plus près possible de la face du disque à laquelle est associé le corps principal.

A cet effet, on fixe le dispositif de suspension sur le corps principal à l'intérieur d'une rainure, par exemple, pratiquée dans la « seconde grande face » contenant les extrémités des conducteurs d'entrée et/ou sortie des transducteurs de ce corps, on peut également fixer le dispositif de suspension à l'intérieur d'une rainure pratiquée dans la « première grande face » disposée en regard de la face du disque associée au transducteur du corps principal. Cette dernière solution est décrite plus en détail dans la demande de brevet français FR-A-2426943 déposée le 26 mai 1978 par la Compagnie demanderesse sous le N° 78 15765 et ayant pour titre : « Plate-forme d'au moins un transducteur de lecture et/ou d'enregistrement d'un support d'informations. »

Une autre solution est décrite dans le brevet US-A-3612775 (MILLER). Le corps principal contenant le transducteur de lecture est disposé à l'intérieur d'un bloc ayant une grande surface aérodynamique. Ce même bloc est disposé dans une ouverture rectangulaire pratiquée à l'intérieur d'un tube protecteur. Cette ouverture est sensiblement plus large que le bloc contenant le corps principal, de façon que ce dernier bouge librement dans une direction axiale et ne puisse être animé d'un mouvement de rotation autour de cet axe.

Toutefois, ce tube protecteur ne peut assurer une protection efficace contre les turbulences puisque celles-ci pourront pénétrer par les deux trous extrêmes du tube et agiront par conséquent sur la suspension et le corps principal.

On connaît également des solutions permettant d'éliminer les forces parasites dues aux turbulences s'exerçant sur le corps principal d'une plate-forme. Une telle solution est décrite dans l'IBM Technical Disclosure Bulletin, Volume N° 9, N° 12 de mai 1967 à la page 1746 ayant pour titre « Flying head loading control », Article de J. P. SCHNEEBELI.

Ce document décrit une plate-forme dont le corps principal est disposé à l'intérieur d'un corps auxiliaire étant eux-mêmes fixés sur un même dispositif de suspension. Il s'agit donc en quelque sorte d'une plate-forme dans laquelle le corps principal est emboîté dans un autre corps de même nature. Le but du corps auxiliaire est de contrôler les turbulences d'air se produisant autour du corps principal. Toutefois, l'inconvénient de ce dispositif consiste en ce qu'il ne protège pas le dispositif de suspension de la plate-forme des forces parasites dues aux turbulences.

Conformément au but de l'invention, afin d'éliminer les forces parasites dues aux turbulences qui s'exercent sur le dispositif de suspension, la plate-forme est munie d'un dispositif de protection qui enveloppe à la fois le corps principal et tout ou partie du dispositif de suspension. Ce dispositif de protection protège non seulement le corps principal, comme les dispositifs de l'art antérieur, mais également le dispositif de suspension en modifiant l'écoulement de l'air autour de celui-ci, ce qui élimine ou du moins limite les effets des nappes tourbillonnaires sur le dispositif de suspension.

Selon l'invention, la plate-forme contenant au moins un transducteur de lecture et/ou d'enregistrement d'un support d'information qui comprend un corps principal contenant ledit transducteur et un dispositif de suspension relié d'une part au corps principal et d'autre part à des moyens porteurs de la plate-forme, la première face du corps principal disposée en regard du support d'information contenant les moyens de transducteur pour capter et/ou enregistrer celle-ci, et des moyens de modification de l'écoulement de l'air ou tout ou partie du corps principal, est caractérisé en ce que lesdits moyens de modification de l'écoulement de l'air sont constitués par un dispositif de protection enveloppant tout ou partie du corps principal et du dispositif de suspension, de façon à éliminer ou au moins limiter les forces parasites dues aux turbulences s'exerçant à la fois sur ledit corps principal et sur ledit dispositif de suspension.

L'invention concerne également une mémoire à disque contenant au moins deux plates-formes selon l'invention telles que décrites ci-dessus. Dans cette mémoire les dispositifs de protection des deux plates-formes qui sont situées dans le même espace séparant deux faces de disque qui sont en regard l'une de l'autre, ces plates-formes étant associées chacune à une face différente, ont une cloison commune permettant de séparer ces dernières.

D'autres aspects et avantages de la présente invention apparaîtront à titre d'exemple en se référant aux dessins annexés :

Sur ces dessins :

la figure 1 représente une plate-forme selon l'art antérieur comportant au moins un transducteur dont le corps principal est représenté en vol au-dessus d'un disque magnétique D ;

la figure 1a étant une vue de côté,

la figure 1b étant une vue de face,

la figure 1c étant une vue de dessous,

la figure 1d étant une vue de trois-quarts en perspective montrant le dispositif de suspension et la première grande face du corps principal ;

la figure 2 montre comment les turbulences agissent sur deux plates-formes selon l'art antérieur, lorsqu'elles sont disposées dans un espace situé entre deux disques $D_1$ et $D_2$,

la figure 3 montre la plate-forme selon l'invention dont le corps principal comporte deux transducteurs, plate-forme montrée en vol en regard d'un disque $D_3$,

la figure 4 est une vue éclatée de trois-quarts en perspective, montrant deux plates-formes selon l'invention disposées en regard de deux disques $D_4$ et $D_5$ à l'intérieur de l'espace situé entre ces deux disques, leurs dispositifs de protection carénés ayant une cloison commune,

la figure 5 est un ensemble de deux figures 5a et 5b montrant sous forme de schéma simplifié, la plate-forme de la figure 4 vue de côté et de face.

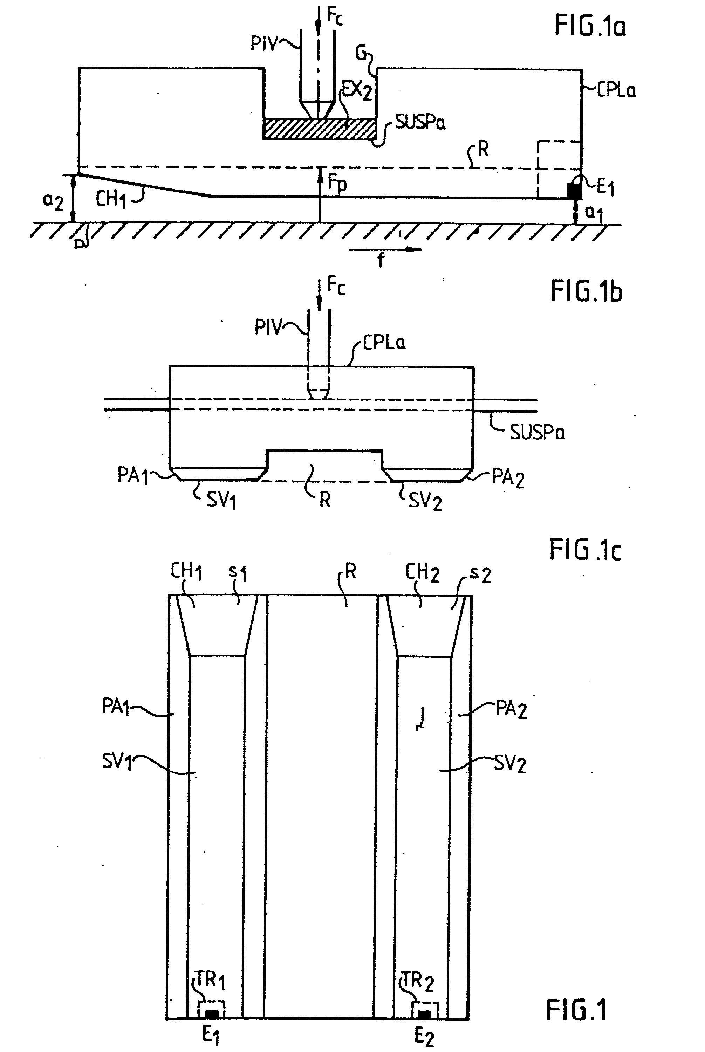

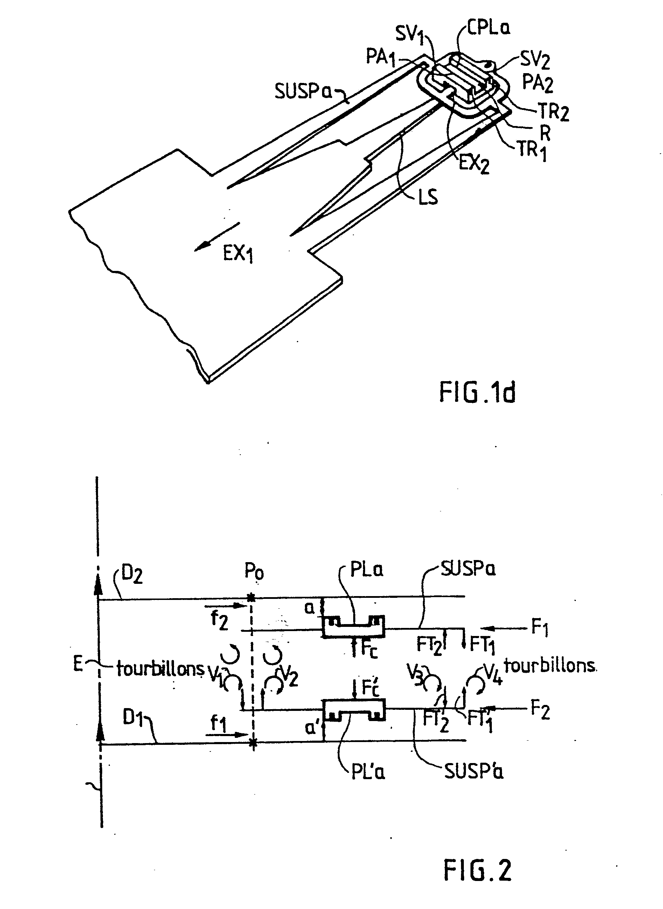

Afin de mieux comprendre les principes de constitution et de fonctionnement de la plate-forme comportant au moins un transducteur selon l'invention, il est utile de faire quelques rappels illustrés par la figure 1 montrant un mode de réalisation préféré d'une plate-forme $PL_a$ selon l'art antérieur.

Cette plate-forme comprend :

— d'une part, un corps principal $CPL_a$ de forme sensiblement parallélépipédique représenté sous la forme d'un catamaran comprenant deux patins $PA_1$ et $PA_2$ entre lesquels est disposée une rainure R ;

— d'autre part, un dispositif de suspension $SUSP_a$.

Chacun des deux patins $PA_1$ et $PA_2$ comprend un transducteur, le patin $PA_1$ comprenant le transducteur $TR_1$ et le patin $PA_2$ comprenant le transducteur $TR_2$. Les transducteurs $TR_1$ et $TR_2$ ont respectivement un entrefer de lecture et/ou d'enregistrement $E_1$ et $E_2$. Les deux patins comprennent respectivement, d'une part, une surface de vol principale $SV_1$ et un chanfrein $CH_1$ de surface $s_1$, et d'autre part une surface de vol principal $SV_2$ et un chanfrein $CH_2$ de surface $s_2$. La surface de vol du patin $PA_1$ est égale à $SV_1 + s_1$ et la surface de vol du patin $PA_2$ est égale à $SV_2 + s_2$. La surface de vol totale du corps principal de la plate-forme $PL_1$ est donc égale à $SV = SV_1 + s_1 + SV_2 + s_2$.

Ainsi qu'on peut le voir à la figure 1a, où l'on montre le corps principal $CPL_a$ de la plate-forme en vol au-dessus du disque magnétique D qui défile avec une vitesse constante dans le sens de la flèche f, la plate-forme est légèrement inclinée par rapport à la surface du disque de telle sorte que les entrefers $E_1$ et $E_2$ soient situés à une altitude de vol $a_1$ au-dessus du disque D inférieure à l'altitude de vol $a_2$ du chanfrein $CH_1$ et du chanfrein $CH_2$. Les deux surfaces de vol $SV_1$ et $SV_2$ font un angle $\alpha$ avec la surface du disque. Cet angle est très faible et de l'ordre de quelques milli-radians. Si l'on considère un point P du disque D on voit que celui-ci passe successivement devant le chanfrein $CH_1$ et devant les entrefers $E_1$ et $E_2$. On dit alors que les chanfreins $CH_1$ et $CH_2$ sont situés à l'avant de la surface de vol du corps principal $CPL_a$ et que les entrefers $E_1$ et $E_2$ sont situés à l'arrière de la surface de vol.

L'une des extrémités $EX_1$ du dispositif de suspension $SUSP_a$ est fixée par tout moyen approprié à des moyens porteurs de la plate-forme qui, lorsque celle-ci est mobile sont constitués par un chariot qui permet de déplacer radialement la plate-forme en regard des pistes du disque magnétique D (le chariot n'est pas représenté à la figure 1d pour simplifier).

L'autre extrémité $EX_2$ du dispositif de suspension $SUSP_a$ est fixée sur le corps principal $CPL_a$, à l'intérieur d'une gorge G pratiquée par exemple dans la face supérieure de celui-ci.

Lorsque le corps $CPL_a$ vole au-dessus du disque D, il se crée un coussin d'air entre la surface de vol SV et la surface du disque, qui exerce une force de pression $F_p$ sur le corps principal ($F_p$ est la portance) proportionnelle à la surface de vol et égale à $k \times SV$ (k étant un facteur de proportionnalité).

Afin de réaliser l'équilibre dynamique du corps principal de la plate-forme en vol au-dessus du disque D, on applique sur la seconde « grande-face » de celui-ci, une force $F_c$ au moyen par exemple d'un pivot P. Cette force $F_c$ qui est la force de chargement, ou encore la charge, est de l'ordre de dix à vingt grammes et est fournie par la lame LS représentée à la figure 1b, lame qui fait office de ressort.

Dans ces conditions, les transducteurs $TR_1$ et $TR_2$ ont alors une altitude de vol $a_1$ sensiblement égale à 0,4-0,5 micron.

On considère la figure 2. Elle représente deux plates-formes selon l'art antérieur, à savoir $PL_a$ et $PL'_a$ en vol au-dessus des faces des deux disques $D_1$ et $D_2$ d'une mémoire à disques comportant une pluralité de ceux-ci, (les autres disques n'étant pas représentés pour simplifier).

Ces plates-formes sont disposées à l'intérieur de l'espace E situé entre les deux disques $D_1$ et $D_2$.

Dans la pratique courante, dans le but d'éliminer les poussières et toutes autres sortes d'impuretés se trouvant dans l'espace E, la mémoire à disques comporte un système de ventilation (non représenté pour simplifier à la figure 2), qui fait circuler l'air le long de la surface des deux disques $D_1$ et $D_2$, à partir des centres de ces derniers jusqu'à leurs périphéries. Cet air qu'on appellera « air ventilé » circule tangentiellement à la surface des disques dans le sens indiqué par les flèches $f_1$ et $f_2$.

Du fait de la rotation des disques, l'air ventilé a tendance à être entraîné dans le sens de cette rotation, tangentiellement aux pistes circulaires du disque. Sa vitesse au voisinage de l'une de celles-ci (c'est-à-dire à une distance de quelques microns) qui est égale à la vitesse linéaire tangentielle de tout point de la piste considérée est plus grande au voisinage d'une piste de la périphérie qu'au voisinage d'une piste plus proche du centre. Inversement, la pression de l'air ventilé est plus faible au voisinage de la périphérie qu'au voisinage du centre.

Il en résulte les conséquences suivantes :

— pour tout point situé entre une piste de numéro d'ordre déterminé $P_0$ et une piste de la périphérie du disque, la pression de l'air ventilé est inférieure à la pression de l'air à l'extérieur de l'espace E situé entre les disques $D_1$ et $D_2$, pression qui est par exemple égale à la pression atmosphérique. Il en résulte qu'une partie de l'air extérieur pénètre dans l'espace E, ce qui est symbolisé à la figure 2 par les flèches $F_1$ et $F_2$. La rencontre entre l'air ventilé circulant selon les flèches $f_1$ et $f_2$ et l'air extérieur circulant selon les flèches $F_1$ et $F_2$ donne naissance à des tourbillons ou nappes tourbillonnaires $V_1$, $V_2$, $V_3$, $V_4$, etc... Ces nappes tourbillonnaires ou tourbillons agissent sur les plates-formes $PL_a$ et $PL'_a$ de la manière suivante : que la plate-forme $PL_a$ (ou $PL'_a$) soit soumise à de très faibles déplacements (inférieurs à la largeur d'une piste) ou des déplacements plus importants, elle est soumise successivement à des forces $FT_1$, $FT_2$, ($FT'_1$, $FT'_2$) qui sont successivement de sens contraire. Cela entraîne soit des variations dans l'altitude de vol $a(a')$ des transducteurs $TR_1$ et $TR_2$ ($TR'_1$ et $TR'_2$) de la plate-forme $PL_a(PL'_a)$, soit des vibrations du dispositif de suspension $SUSP_a$ ($SUSP'_a$) qui font également varier ladite altitude de vol. Il en résulte des variations sensibles de l'amplitude des signaux délivrés par chacun des transducteurs $TR_1$ et $TR_2$ ($TR'_1$ et $TR'_2$). Ainsi, si pour une altitude moyenne de vol $a_m$ le signal délivré par chacun des transducteurs $TR_1$ et $TR_2$ a une amplitude moyenne égale à $U_m$, l'amplitude des signaux délivrés varie, dans la pratique entre deux valeurs $U_{min}$ et $U_{max}$ respectivement égales à $(U_m - 50\% \times U_m)$ et $(U_m + 50\% \times U_m)$.

Afin de réduire les risques d'erreurs dans la détermination de la valeur des informations correspondant à chacun de ces signaux, il est donc nécessaire de réduire, voire d'éliminer soit lesdites nappes tourbillonnaires, soit leurs effets, au niveau tant du corps principal que du dispositif de suspension de ces plates-formes.

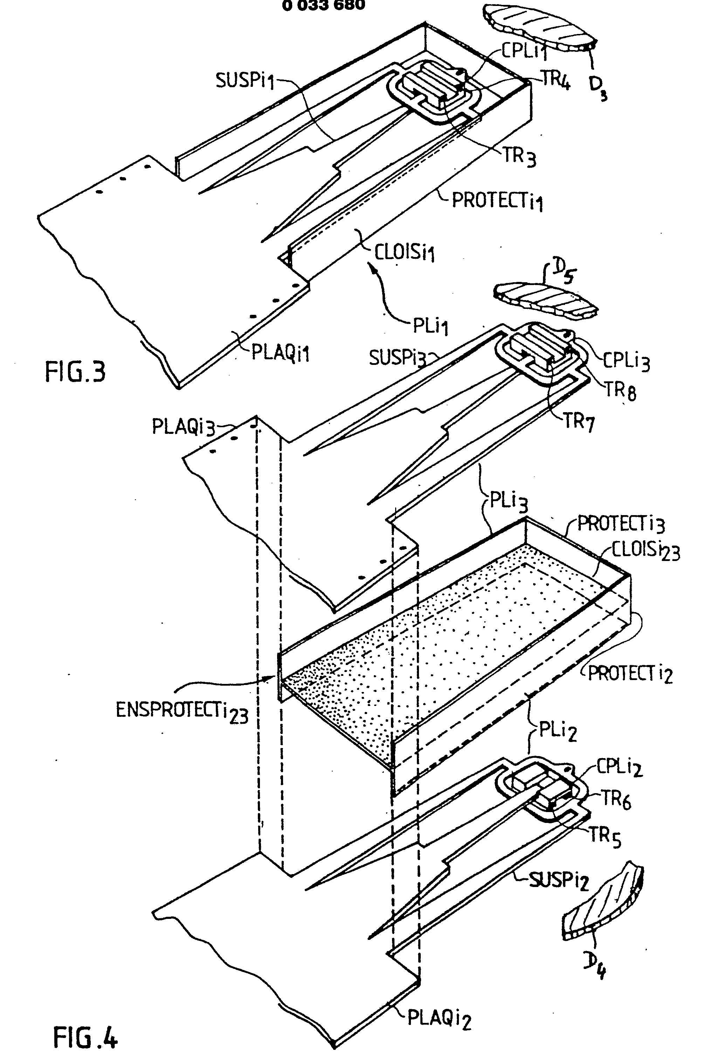

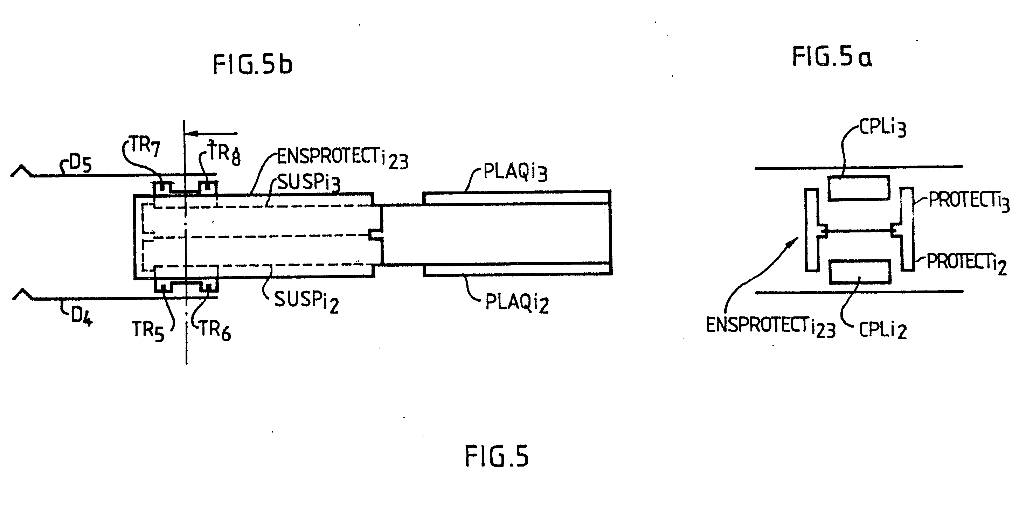

Les plates-formes selon l'invention représentées aux figures 3, 4 et 5 permettent d'atteindre un tel résultat. Ainsi qu'on peut le voir à la figure 3, la plate-forme $PL_{i1}$ comprend un dispositif de protection $PROTECT_{i1}$ qui entoure le dispositif de suspension $SUSP_{i1}$ et le corps principal $CPL_{i1}$ à l'exception des parties de ceux-ci qui se trouvent en regard du disque $D_3$ associé aux transducteurs $TR_3$ et $TR_4$ du corps principal $CPL_{i1}$. Le dispositif de protection $PROTECT_{i1}$ comprend, ainsi qu'on peut le voir sur la partie inférieure de la figure 3, une cloison $CLOIS_{i1}$ située du côté de la seconde « grande face » du corps principal $CPL_{i1}$ et qui a une surface sensiblement perpendiculaire à la surface du disque $D_3$. Le dispositif $PROTECT_{i1}$ est fixé par des moyens appropriés, par exemple, par rivetage ou par soudure à une plaque $PLAQ_{i1}$ fixée par des moyens non représentés au chariot qui porte ladite plate-forme $PL_{i1}$.

On considère la figure 4 qui représente un mode préféré de réalisation de deux plates-formes $PL_{i2}$ et $PL_{i3}$ selon l'invention, associées respectivement aux disques $D_4$ et $D_5$. La plate-forme $PL_{i2}$ comporte un corps principal $CPL_{i2}$ contenant deux transducteurs $TR_5$ et $TR_6$. La plate-forme $PL_{i3}$ comporte un corps principal $CPL_{i3}$ contenant les deux transducteurs $TR_7$ et $TR_8$. Les dispositifs de suspension $SUSP_{i2}$ et $SUSP_{i3}$ des plates-formes $PL_{i2}$ et $PL_{i3}$ sont identiques au dispositif de suspension $SUSP_{i1}$ de la plate-forme $PL_{i1}$ selon l'invention représentée à la figure 3, dispositif de suspension lui-même identique au dispositif $SUSP_a$ de la plate-forme $PL_a$. Les dispositifs de suspension $SUSP_{i2}$ et $SUSP_{i3}$ sont solidaires respectivement des plaques $PLAQ_{i2}$ et $PLAQ_{i3}$ elles-mêmes solidaires d'un même chariot qui porte lesdites plates-formes $PL_{i2}$ et $PL_{i3}$. Le dispositif de protection de la plate-forme $PL_{i2}$ est dénommé $PROTECT_{i2}$, alors que celui de la plate-forme $PL_{i3}$ est dénommé $PROTECT_{i3}$. Ces deux dispositifs de protection ont une cloison commune $CLOIS_{i23}$. Ainsi qu'on peut mieux le voir à la figure 4, les dispositifs de protection $PROTECT_{i2}$ et $PROTECT_{i3}$ constituent un ensemble de protection $ENSPROTECT_{i23}$ monobloc. La partie inférieure (voir figure 4) de cet ensemble de protection qui appartient au dispositif de protection $PROTECT_{i2}$ est fixé par des moyens appropriés (par exemple par rivetage ou par soudure) à la plaque $PLAQ_{i2}$, alors que la partie supérieure dudit ensemble qui appartient au dispositif de protection $PROTECT_{i3}$ est fixé par des moyens appropriés identiques aux précédents à la plaque $PLAQ_{i3}$.

L'expérience montre, aussi bien avec la plate-forme $PL_{i1}$ qu'avec les plates-formes $PL_{i2}$ et $PL_{i3}$, que les effets des tourbillons ou nappes tourbillonnaires sur les variations d'amplitude des signaux délivrés par les transducteurs desdites plates-formes sont beaucoup plus faibles que pour les plates-formes selon l'art antérieur : en effet, l'air provenant de l'extérieur passe pardessus ou sur les côtés des différents dispositifs de protection $PROTECT_1$ et $ENSPROTECT_{i23}$ sans passer au voisinage immédiat des différents corps principaux (et donc des transducteurs) $CPL_{i1}$, $CPL_{i2}$ et $CPL_{i3}$, ainsi que des dispositifs de suspension $SUSP_{i1}$, $SUSP_{i2}$ et $SUSP_{i3}$. On montre alors que les variations d'amplitude de ces signaux autour de la valeur moyenne $U_m$ sont de l'ordre de 10 à 15 % environ de celle-ci. On peut donc dire que, aussi bien le dispositif de protection $PROTECT_{i1}$ de la plate-forme $PL_{i1}$ que les dispositifs de protection $PROTECT_{i2}$ et $PROTECT_{i3}$ des plates-formes $PL_{i2}$ et $PL_{i3}$ constituent des moyens modifiant l'écoulement de l'air autour du corps principal et du dispositif de suspension de leurs plates-formes respectives, de façon à limiter voire annuler les effets des nappes tourbillonnaires sur les conditions de vol de ce même corps principal en regard du disque auquel il est associé. Cela a pour résultat de diminuer les variations d'amplitude des signaux délivrés par les transducteurs autour de leur valeur moyenne.

**Revendications**

1. Plate-forme contenant au moins un transducteur ($TR_3$, $TR_4$) de lecture et/ou d'enregistrement d'un support d'informations qui comprend un corps principal ($CPL_{i1}$) contenant ledit transducteur et un dispositif de suspension ($SUSP_{i1}$) relié d'une part au corps principal ($CPL_{i1}$) et d'autre part à des moyens porteurs de la plate-forme ($PLAQ_{i1}$), la première face du corps principal disposée en regard du support d'informations contenant les moyens du transducteur pour capter et/ou enregistrer celles-ci, des moyens de modification de l'écoulement de l'air autour de tout ou partie du corps principal caractérisé en ce que lesdits moyens de modification de l'écoulement de l'air sont constitués par un dispositif de protection ($PROTECT_{i1}$) enveloppant tout ou partie du corps principal ($CPL_{i1}$) et du dispositif de suspension ($SUSP_{i1}$) de façon à éliminer ou au moins limiter les forces parasites dues aux turbulences s'exerçant à la fois sur ledit corps principal ($CPL_{i1}$) et sur ledit dispositif de suspension ($SUSP_{i1}$).

2. Mémoire à disques contenant au moins deux plates-formes selon la revendication 1, caractérisée en ce que, les dispositifs de protection de deux plates-formes ($PL_{i2}$, $PL_{i3}$) situées dans le même espace séparant deux faces de deux disques qui sont en regard l'une de l'autre, ces plates-formes étant associées chacune à une face différente ($D_4$, $D_5$), ont une cloison commune ($CLOIS_{i23}$) permettant de séparer les deux plates-formes ($PL_{i2}$, $PL_{i3}$).

**Claims**

1. Platform containing at least one read and/or write transducer ($TR_3$, $TR_4$) of a data carrier, which comprises a main element ($CPL_{i1}$) containing the said transducer and a suspension device ($SUSP_{i1}$) connected on the one hand to the main element ($CPL_{i1}$) and on the other hand to means carrying the platform ($PLAQ_{i1}$), the first face of the main element disposed facing the data carrier containing the transducer means for picking up and/or recording said data, means for modifying the flow of air around all or part of the main element, characterised in that the said means for modifying the flow of air are formed by a protection device (PROTECT$_{i1}$) surrounding all or part of the main element (CPL$_{i1}$) and by the suspension device (SUSP$_{i1}$), in such a manner as to eliminate or at least limit the parasitic forces caused by turbulences acting simultaneously on the said main element (CPL$_{i1}$) and on the said suspension device (SUSP$_{i1}$).

2. Disc memory containing at least two platforms according to claim 1, characterised in that the protection devices of two platforms (PL$_{i2}$, PL$_{i3}$) situated within the same space separating two surfaces of two discs which are opposite one another, these platforms being each associated with a different surface (D$_4$, D$_5$), have a common partition (CLOIS$_{123}$) making it possible to separate the two platforms (PL$_{i2}$, PL$_{i3}$).

**Ansprüche**

1. Plattform mit wenigstens einem Auslese- und/oder Aufzeichnungswandler (TR$_3$, TR$_4$) für einen Informationsträger, mit einem Hauptkörper (CPL$_{i1}$), welcher den genannten Wandler enthält, und einer Aufhängungsvorrichtung (SUSP$_{i1}$), die einerseits an den Hauptkörper (CPL$_{i1}$) und andererseits an Trägermittel (PLAQ$_{i1}$) für die Plattform angeschlossen ist, wobei die erste Fläche des Hauptkörpers, die gegenüber dem Informationsträger angeordnet ist, die Wandlermittel enthält, um die Informationen aufzunehmen und/oder aufzuzeichnen, und wobei Mittel zum Verändern der Luftströmung um den gesamten Hauptkörper herum oder einen Teil desselben vorgesehen sind, dadurch gekennzeichnet, daß die genannten Mittel zur Veränderung der Luftströmung gebildet sind aus einer Schutzvorrichtung (PROTECT$_{i1}$), welche den Hauptkörper (CPL$_{i1}$) und die Aufhängungsvorrichtung (SUSP$_{i1}$) ganz oder teilweise umgibt, so daß die Störkräfte eliminiert oder wenigstens begrenzt werden, die auf Turbulenzen beruhen, welche gleichzeitig auf den genannten Hauptkörper (CPL$_{i1}$) und auf die genannte Aufhängungsvorrichtung (SUSP$_{i1}$) einwirken.

2. Plattenspeicher mit wenigstens zwei Plattformen nach Anspruch 1, dadurch gekennzeichnet, daß die Schutzvorrichtungen von zwei Plattformen (PL$_{i2}$, PL$_{i3}$) in demselben Raum angeordnet sind, welcher zwischen zwei Flächen von zwei einander gegenüberliegenden Platten liegt, und diese Plattformen jeweils einer anderen Fläche (D$_4$, D$_5$) zugeordnet sind und eine gemeinsame Wandung (CLOIS$_{123}$) aufweisen, die eine Trennung der beiden Plattformen (PL$_{i2}$, PL$_{i3}$) ermöglicht.

FIG.1a

FIG.1b

FIG.1c

FIG.1

FIG.1d

FIG.2

2

FIG.3

FIG.4

FIG.5b

FIG.5a

FIG.5